# EUROPEAN PATENT SPECIFICATION

(11) **EP 4 285 731 B1**
(45) Date of publication and mention of the grant of the patent: **23.04.2025**
(21) Application number: 23175345.0
(22) Date of filing: 25.05.2023
(51) Int. Cl.: A22C 11/12

(54) **MACHINE FOR TYING FOOD PRODUCTS**
MASCHINE ZUM BINDEN VON NAHRUNGSMITTELN
MACHINE POUR LIER DES PRODUITS ALIMENTAIRES

(30) Priority: 03.06.2022 IT 202200011726
(43) Date of publication of application: 06.12.2023
(73) Proprietor: INOX Meccanica S.P.A., 46044 Goito, Frazione Solarolo (MN) (IT)
(72) Inventor: BOLZACCHINI, Giovanni, 25017 LONATO DEL GARDA BS (IT)
(74) Representative: Modiano, Micaela Nadia

(56) References cited:
- EP-A1- 0 865 732
- EP-A1- 1 477 067
- DE-B- 1 012 210
- DE-C- 564 187
- GB-A- 1 569 276

## Description

The present invention relates to a machine for tying food products.

Tying machines are known which allow to apply a twine around food products that have a substantially cylindrical shape, such as pieces of whole or packed meat, in order to maintain the shape of the food product being prepared.

In particular, tying machines are known which are constituted by a fixed frame which supports a conveyor, which allows the axial movement of the food product to be tied along an advancement direction.

Moreover, on the fixed frame there is a winding device, which comprises means for feeding a tying twine, which are constituted by a spool for unwinding said twine, and means for locking the free end or a portion of the twine with respect to the fixed frame.

In particular, the spool can be actuated in motion, with respect to the fixed frame, along a circular trajectory extending about the advancement direction of the food product, and integrally with the spool there are twine guiding means which form a portion of twine extending between the trajectory of the spool and the means for locking said twine, so that as a consequence of the movement of the spool the twine is wound around the food product placed on the conveyor, forming at least one loop or spiral winding, depending on whether the food product is respectively kept stationary or is moved with respect to the fixed frame during the application of the twine by the winding device.

Also on the fixed frame there is a knotting device which, at the end of the winding of the twine around the food product, allows to connect with a knot a first portion of the twine, extending from the twine locking means toward the food product, to at least one second portion of the twine, which extends instead from the food product toward the spool through the guiding means.

One problem that is encountered with these machines, in particular when non-stretch twine that cannot elastically elongate is used, is that in tying certain food products, such as for example so-called coppa, the food product tends to be more constructed in the winding of the twine at its front end, relative to its direction of travel on the machine, than at its rear end, with the result that the final product tends to assume a substantially pear-like or in any case non-cylindrical shape, with a smaller cross-section at one end than at the other, which is not considered commercially acceptable.

Another problem that is encountered is that depending on the diametrical dimensions of the food product to be tied, there can be a considerable variation in the distance between the product and the spool during the movement of the latter around the product, with the result that the second portion of the twine may be excessively loose in the positions of the spool that are closest to the product, especially if the twine is non-stretch.

EP 1 477 067 and DE 564 187 disclose a tying machine as defined in the preamble of claim 1.

The aim of the present invention is to provide a tying machine that is capable of improving the background art in one or more of the above aspects.

Within this aim, an object of the invention is to provide a tying machine that allows to perform an optimal tying of food products, ensuring that they maintain a substantially cylindrical shape.

Another object of the invention is to provide a tying machine capable of providing correct tying regardless of the diametrical dimensions of the products to be tied.

A further object of the invention is to provide a tying machine that is capable of operating validly with both stretch and non-stretch twines.

Still another object of the invention is to provide a tying machine that can offer the greatest assurances of reliability and safety in its operation.

A still further object of the present invention is to overcome the drawbacks of the background art in a manner that is alternative to any existing solutions.

Not least object of the invention is to provide a machine for tying food products that is structurally simple so as to be relatively easy to provide and competitive in cost.

This aim, as well as these and other objects that will become better apparent hereinafter, are achieved by a machine for tying food products according to claim 1, optionally having one or more of the characteristics of the dependent claims.

Further characteristics and advantages of the invention will become better apparent from the description of preferred but not exclusive embodiments of the machine for tying food products according to the invention, illustrated by way of non-limiting example in the accompanying drawings, wherein:

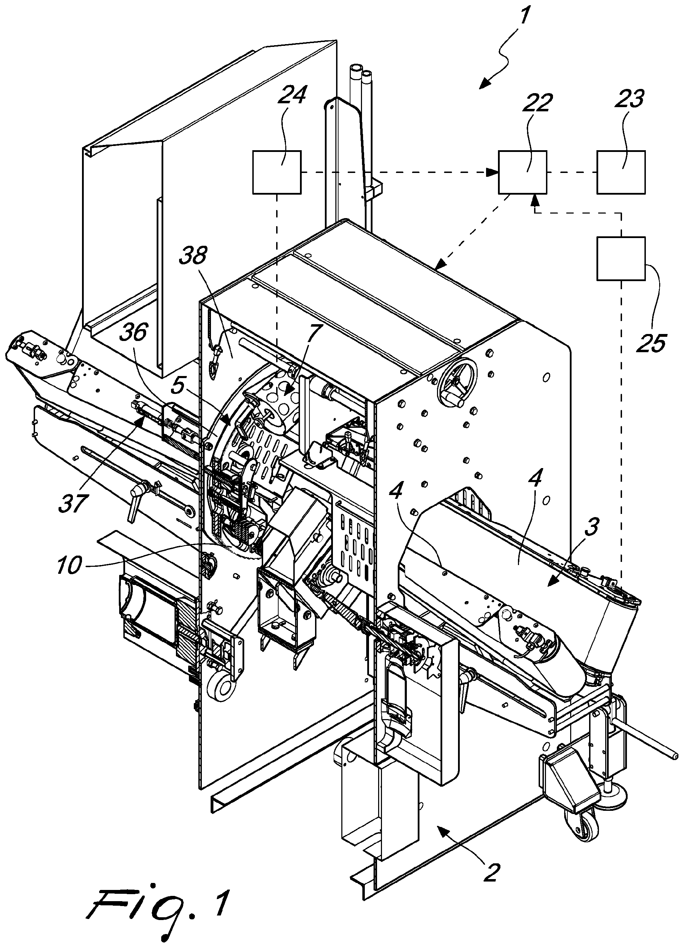

Figure 1 is a partially cutout perspective view of the binding machine according to the invention;

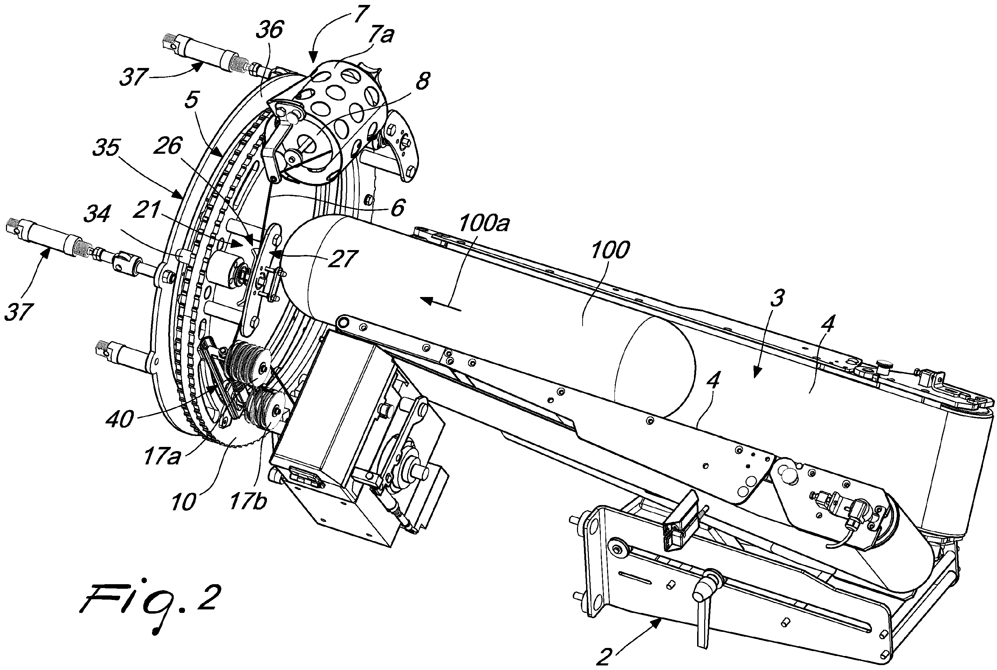

Figure 2 is a view of the machine according to the invention, with parts omitted for the sake of simplicity;

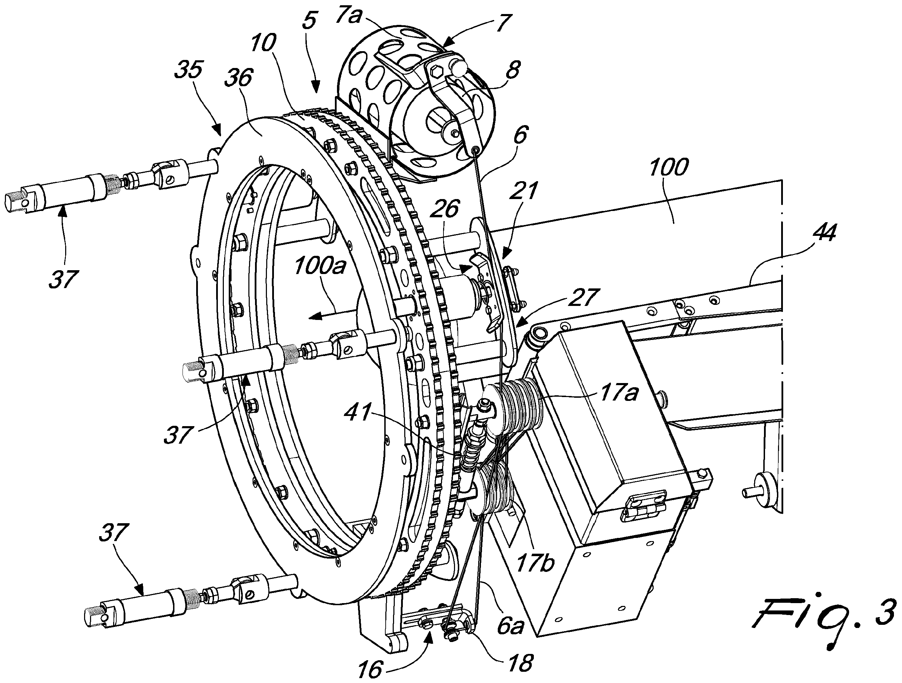

Figure 3 is a partial perspective view of the machine according to the invention, with parts omitted for the sake of simplicity;
Figure 4 is a front view of a portion of the machine, with parts omitted for the sake of simplicity;
Figure 5 is a perspective view of a detail of the machine;

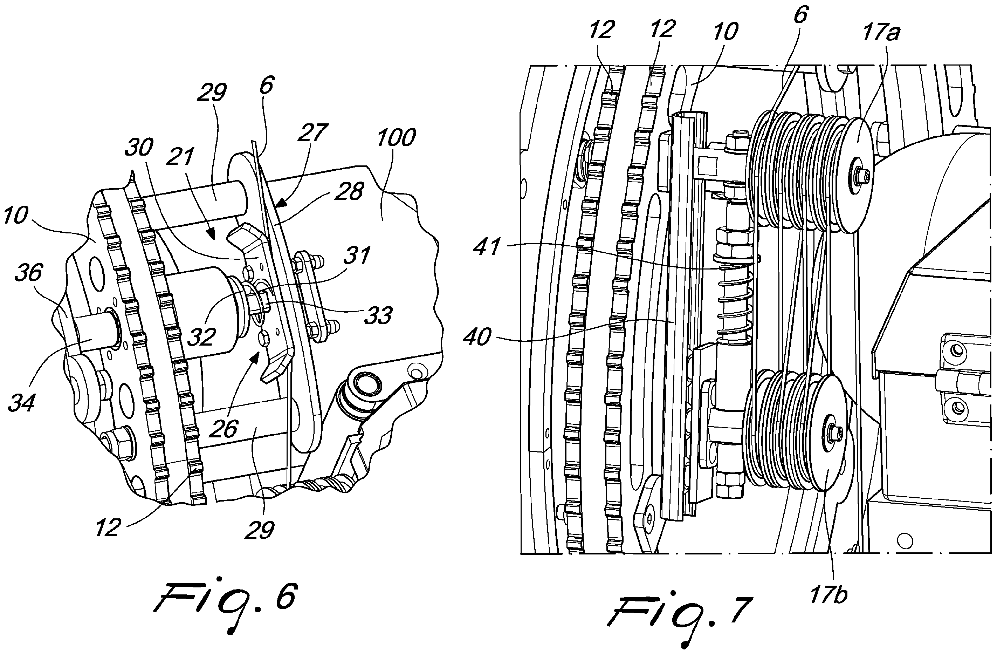

Figure 6 is a perspective view, from a different angle, of the detail of the machine of Figure 5;
Figure 7 is a perspective view of another detail of the machine;
Figure 8 is a perspective view of a portion of the machine according to the invention, with parts omitted to highlight the twine locking means and knotting means.

With reference to the figures, the machine for tying food products according to the invention, generally designated by the reference numeral 1, comprises a fixed frame 2 which supports supporting means 3 designed to receive in resting contact at least one food product 100 to be tied, which has, for example, a substantially cylindrical shape.

The supporting means 3 advantageously comprise means for moving the food product 100 with respect to the fixed frame 2 along an advancement direction 100a.

Conveniently, the supporting means 3 are constituted by at least one conveyor 4 which allows to move the food product 100 along an advancement direction 100a which is substantially parallel to the axis of extension of said food product.

More particularly, the supporting means 3 may, for example, be constituted by a pair of conveyor belts 4 which are mutually opposite and arranged on inclined planes that converge downward.

Moreover, the fixed frame 2 supports at least one winding device 5 whose function is to wind at least one twine 6 around the food product 100 arranged on the supporting means 3.

The means for moving the food product 100 allow, in particular, to make the food product 100 advance with respect to the winding device 5.

More particularly, the winding device 5 comprises feeder means 7 for the twine 6, which are, for example, constituted by a spool for unwinding a reel 8 of the twine 6, preferably accommodated in a container 7a.

The feeder means 7 for the twine 6 can be actuated in motion by movement means 9 along a circular trajectory, which extends around the supporting means 3.

In particular, the feeder means 7 are supported by a movement ring 10, which is arranged around the supporting means 3, so that it can be crossed axially by the food product 100, and can be turned about its axis with respect to the fixed frame 2.

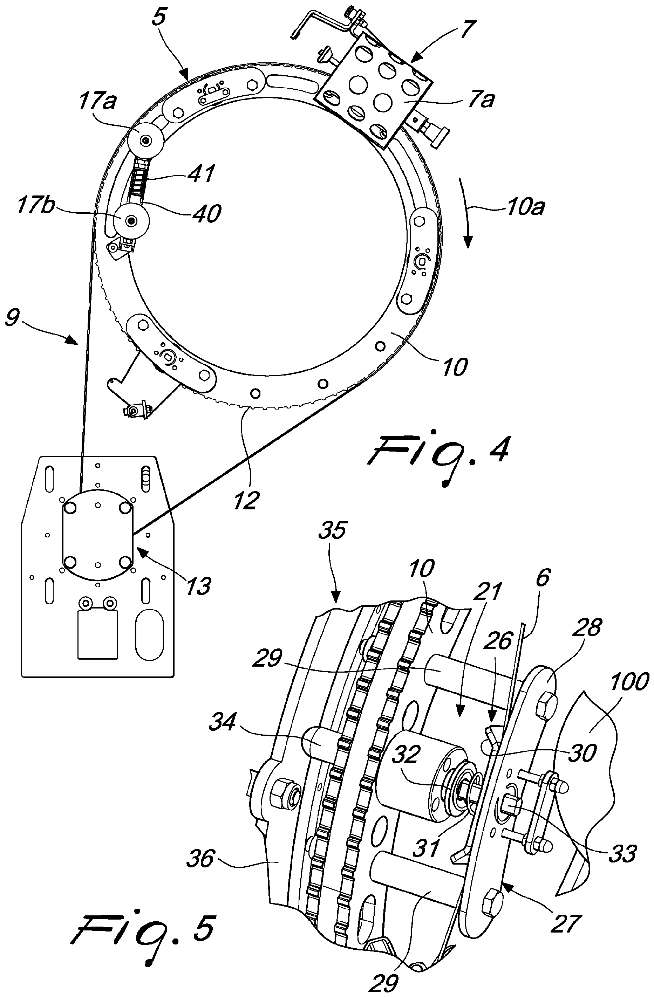

Appropriately, as shown in Figure 4, the movement ring 10 is positioned substantially at an end or discontinuity of the supporting means 3 and advantageously can be actuated to rotate by means of a toothed belt 11, which has a closed extension and meshes with at least one set of teeth 12, which is formed along the outer edge of the movement ring 10.

In particular, as also shown in Figure 4, the toothed belt can be driven by means of a motor 13, supported by the fixed frame 2.

The winding device 5 comprises, moreover, locking means 14, which are supported by the fixed frame 2 and allow to lock removably, with respect to the fixed frame 2, at least one portion of the twine 6.

In particular, the locking means 14 comprise, conveniently, a per se known retention element 15, capable of engaging a portion of the twine 6 and possibly even clamping it against the fixed frame 2.

For example, at least in the initial step of applying the twine 6 around the food product 100, the retention element 15 allows to lock the free end of the twine 6 with respect to the fixed frame 2 and, in other steps of the operation of the machine, allows to engage other portions of said twine 6 with respect to the fixed frame 2, as per se known.

The winding device 5 furthermore comprises guiding means 16 for the twine 6 which are movable integrally with the feeder means 7 and are in practice interposed, along the extension of the twine 6, between the feeder means 7 and the locking means 14.

Appropriately, the guiding means 16 may comprise at least one pair of redirection rollers 17a and 17b, which are mounted on the movement ring 10 and around which the twine 6 that arrives from the unwinding spool of the reel 8 of the twine 6 is wound according to at least one turn.

Preferably, the redirection rollers 17a, 17b are provided with a plurality of circumferential grooves for accommodating the twine 6.

Moreover, the guiding means 16 comprise one or more engagement elements 18, constituted for example by one or more eyelets or other redirection and guiding elements, which are supported by the movement ring 10 and slidingly engage the twine 6, in order to guide the twine 6 so as to form, following the rotation of the movement ring 10 along a direction of rotation 10a, one or more windings of the twine 6 around the food product 100.

In particular, the guiding means 16 and, more particularly, the engagement elements 18 allow to define, during the winding of the twine 6 around the food product 100, a portion 6a of the twine 6 that extends between the guiding means 16 and the food product 100 and is drawn to move by the rotation of the movement ring 10 about its own axis.

Once the winding device 5 has provided a desired number of windings of the twine 6 around the food product 100, the portion 6a of the twine that extends from the food product 100 toward the feeder means 7 is joined to a portion 6b of the twine 6, which extends, in turn, from the locking means 14 of the twine 6 toward the food product 100, by means of a knot that is formed by knotting means 19, which are supported by the fixed frame 2 and are per se known.

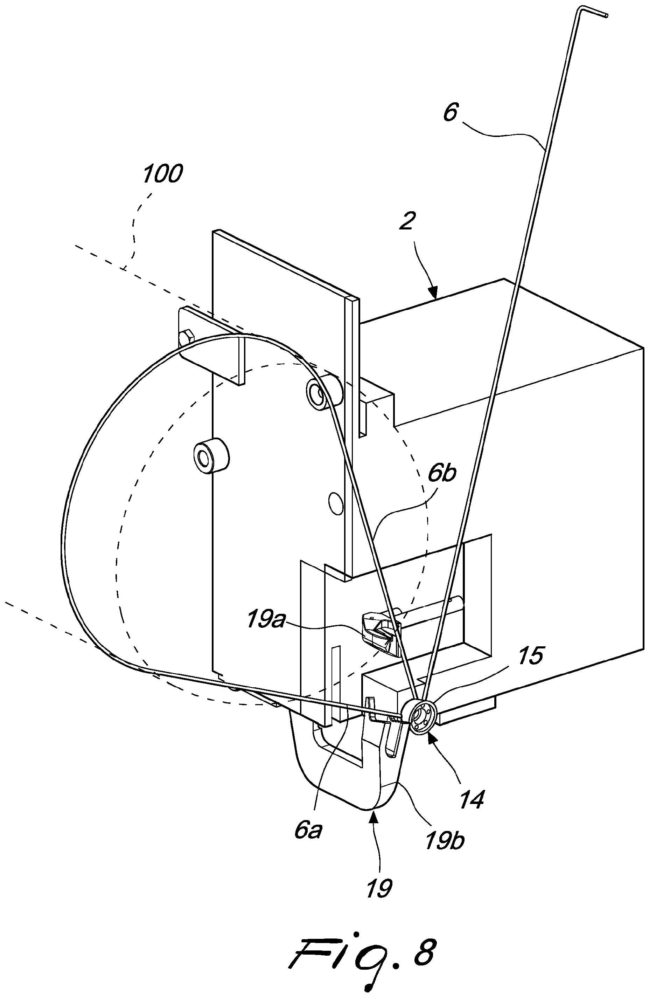

For example, as shown in Figure 8, the knotting means 19 may comprise a knotting device 19a, capable of providing, in a per se known manner, a connecting knot between the portions 6a and 6b of the twine 6, and an insertion device 19b, which cooperates with the knotting device 19a and can move on command to carry the portions 6a and 6b of the twine 6 into the region of action of the knotting device 19a, so that the latter can perform knotting.

Advantageously, twine cutting means, not shown, are also provided which have the function of cutting the part of the twine 6 that remains between the knot formed by the knotting means 19 and the locking means 14.

According to the invention, means are provided for varying the tension of the twine 6 during at least one operational step of the operation of the machine.

In particular, such means for varying the tension of the twine 6 are capable of varying the tension of the twine 6 during the winding of the twine 6 around the food product 100 and/or during the advancement of the food product 100 relative to the fixed frame 2.

Advantageously, the means for varying the tension of the twine 6 comprise braking means 21 for the twine 6, which are movable relative to the twine 6 and, more particularly, with respect to the fixed frame 2, integrally with the feeder means 7.

In particular, the braking means 21 are capable of applying a braking action, which is variable on command, to the relative sliding between the twine 6 and said braking means.

In detail, the braking means 21 are supported by the movement ring 10 and are interposed along the extension of the twine 6, preferably between the spool for the unwinding of the reel 8 and the redirection rollers 17a, 17b.

The braking means 21 are functionally connected to control means 22, which are configured to drive the braking means 21 so as to automatically vary the braking action that they apply to the twine 6 during the operation of the machine.

The control means 22 are appropriately constituted by an electronic control unit, which is programmable by the operators, for example via user interface means 23, advantageously constituted by a control panel.

In particular, the control means 22 can be configured by the operators so that the control means 22 can actuate the variation of the braking action applied by the braking means 21 according to the angular position assumed by the feeder means of the twine 6, with respect to the fixed frame 2, and/or according to the advancement level of the food product 100 with respect to the fixed frame 2 during the operation of the machine.

Appropriately, the control means 22 are functionally connected to sensor means for detecting the position of the feeder means 7 of the twine 6 with respect to the fixed frame 2 and/or to sensor means for detecting the advancement level of the food product 100 with respect to the fixed frame 2.

Advantageously, the sensor means comprise at least one first position transducer 24, for detecting the angular position of the movement ring 10 with respect to the fixed frame 2, and at least one second position transducer 25, which is assigned to detecting the advancement of the food product 100 on the supporting means 3 with respect to a preset reference point which is integral with the fixed frame 2.

Advantageously, the braking means 21 comprise a presser element 26 and an abutment element 27 between which the twine 6 is interposed, so that the twine 6 can be engaged, at mutually opposite regions, by the presser element 26 and the abutment element 27, so that the twine 6 is braked in its sliding with respect to the braking means 21 by the friction applied to it by the engagement with the presser element 26 and the abutment element 27.

Advantageously, means are provided for varying the compression force that can be applied by the presser element 26 to the twine 6, in particular during the execution of one or more operational steps of the operation of the machine and more particularly during the rotary motion of the movement ring and/or during the execution of at least one portion of movement by the food product 100 in its advancement path with respect to the fixed frame 2.

In detail, the presser element and the abutment element conveniently can move with respect to each other toward each other or mutually apart, in order to allow to vary the frictional action applied by them on the twine 6 and, therefore, consequently vary the braking action applied to the twine by the braking means 21.

Conveniently, the presser element 26 can be actuated with a motion toward or away from the abutment element 27 by virtue of actuation means, appropriately controlled by the control means 22.

In greater detail, the abutment element 27 comprises, for example, an abutment plate 28 that is integrally connected to the movement ring 10 and is arranged so as to face, with its face designed to engage the twine 6, an axial face of the movement ring 10.

Appropriately, the abutment plate 28 is arranged, with its plane of arrangement, on a plane that is substantially perpendicular to the axis of the movement ring 10.

For example, the abutment plate 28 is supported by the movement ring 10 by means of a pair of support pins 29 which protrude from the movement ring 10 in an axial direction.

Advantageously, the presser element 26 in turn comprises a twine braking shoe 30 that faces the abutment plate 28 and, more in particular, the face of the abutment plate 28 directed toward the movement ring 10.

The twine braking shoe 30 is mounted on the movement ring 10 so as to be integral with the movement ring 10 in its rotation about its own axis, while still being able to translate, along a direction that is substantially parallel to the axis of the movement ring 10, so that it can be moved closer to or further away from the abutment plate 28.

Advantageously, the twine braking shoe 30 is pushed elastically in the direction of the abutment plate 28, so that it is possible to clamp the twine between the twine braking shoe and the abutment plate, by elastic means, which are appropriately provided by a spring 31 which acts on the face of the twine braking shoe 30 that is opposite the one directed toward the abutment plate 28.

The twine braking shoe 30 and the abutment plate 28 thus act on the twine 6 so as to generate, while the twine 6 is being unwound from the reel 8, during the rotation of the movement ring 10 about its axis, a frictional force which contrasts the relative sliding of the twine 6, with respect to the twine braking shoe 30 and the abutment plate 28, and which leads to a tensioning action on said twine.

Means for varying the elastic action applied by said elastic means to the twine braking shoe 30 are provided and advantageously comprise means for varying the length of the spring 31.

In particular, the spring 31 acts between the twine braking shoe 30 and a pusher plate 32 that can be moved on command to vary its distance from the twine braking shoe 30 during the rotary motion of the movement ring 10 and/or during the advancement motion of the food product 100, with respect to the fixed frame 2.

More particularly, the twine braking shoe 30 is mounted so that it can slide, but not rotate, on a supporting stem 33, preferably having a substantially polygonal cross-section, which is arranged, with its axis, substantially parallel to the axis of the movement ring 10.

The supporting stem 33 is supported, in turn, by the movement ring 10 with the ability to slide along its axis.

Appropriately, the supporting stem 33 is furthermore supported, so that it can slide along its axis, also by the abutment plate 28.

The sliding movement of the supporting stem 33 of the twine braking shoe 30 along its axis, with respect to the movement ring 10, is performed by virtue of actuation means.

In greater detail, the pusher plate 32 is integrally fixed around the supporting stem 33 and is appropriately arranged between the twine braking shoe 30 and the movement ring 10, while the spring 31 is advantageously interposed between the twine braking shoe 30 and the pusher plate 32.

With reference to the embodiment shown, the supporting stem 33 slides smoothly through the movement ring 10 so that it protrudes from the face of the movement ring 10 that is directed oppositely with respect to the twine braking shoe 30.

At one of its ends, the supporting stem is advantageously connected to a contact pad 34, which can engage slidingly, during the rotary motion of the movement ring 10, a pusher element 35, which is movable, with respect to the fixed frame 2, along a direction that is substantially parallel to the axis of the movement ring 10.

Advantageously, the pusher element 35 comprises an actuation ring 36, which is arranged so that its axis is oriented substantially parallel to the advancement direction 100a of the food product 100 and is supported by the fixed frame 2 so that it can move along a direction that is substantially parallel to its axis.

In particular, as shown, the contact pad 34 is connected to the end of the supporting stem 33 that protrudes from the face of the movement ring 10 that is directed oppositely with respect to the twine braking shoe 30.

More particularly, the actuation ring 36 is arranged so as to face, with one of its axial faces, the axial face of the movement ring 10 that is directed oppositely with respect to the twine braking shoe 30 and is mounted on the fixed frame 2 substantially coaxially to the axis of the movement ring 10.

The movement of the actuation ring 36 along its axis is provided for example by actuation cylinders 37, preferably three, evenly angularly spaced around the axis of the actuation ring 36.

Advantageously, the actuation cylinders 37 are supported by the fixed frame 2 and are connected to the actuation ring 36 by means of their stems.

Preferably, the actuation cylinders 37 are fixed to a face of a supporting wall 38 which is integral with the fixed frame and their stems axially cross the supporting wall 38.

In greater detail, the actuation ring 36 and the movement ring 10 are arranged on the side of the supporting wall 38 that is opposite with respect to the side where the actuation cylinders 37 are located.

Advantageously, the actuation cylinders 37 are controlled by progressive valves driven by the control means 22.

Appropriately, in order to allow optimal takeup of the twine 6 in the operational steps of the operation of the machine in which twine tension variation is performed by virtue of the braking means 21, means are provided which are adapted to push at least one of the redirection rollers 17a and 17b into a position in which it is spaced from the other.

In particular, at least one of the redirection rollers, for example the one indicated by 17b, is slidingly mounted on a linear guide 40 extending substantially at right angles to the axes of the redirection rollers 17a, 17b and elastic pushing means 41 are provided which are interposed between the redirection rollers 17a, 17b and act so as to push the redirection roller 17b in the opposite direction with respect to the redirection roller 17a along the linear guide 40.

The operation of the machine according to the invention is as follows.

The operator sets up the operation of the machine via the control panel and proceeds to arrange the food product 100 on the supporting means 3.

The conveyors 4 are activated to bring a portion of the food product 100 at the winding device 5.

At this point, the movement ring 10 is turned in the direction of rotation 10a about its own axis, so that the portion 6a of the twine 6 can rotate until it comes into contact with the food product 100, winding itself around it, such as to provide at least one winding of the twine 6 around the food product 100.

With the movement ring 10 rotating about its axis, the contact pad 34 is moved to slide on the actuation ring 36, being kept pushed against the actuation ring itself by the action of the spring 31 on the pusher plate 32.

During the rotation of the movement ring 10, to ensure that the required tension of the twine 6 is maintained, the control means 22, based on the angular position of the movement ring 10 detected by means of the first position transducer 24, actuate, by virtue of the activation of the actuation cylinders 37, a displacement of the actuation ring 36 so as to produce the axial sliding of the supporting stem 33 and, therefore, the variation of the position of the pusher plate 32 with respect to the fixed frame 2, with consequent variation of the action applied by the spring 31 to the twine braking shoe 30 and consequent variation of the braking force applied by the twine braking shoe on the twine 6 in cooperation with the abutment plate 28.

Once the desired number of windings of twine 6 have been applied around the food product 100, the knotting means are activated and form a knot between the portions 6a and 6b of the twine 6.

At this point, after the twine locking means have been actuated so as to make them engage a new portion of the twine 6, the cutting means are activated and cut the portion of the twine that is located between the knot formed by the knotting means 19 and the locking means 14.

The machine is thus ready to apply at least one more winding of twine 6 around the food product 100 after moving the food product 100 by means of the conveyors 4 in the advancement direction 100, so that a new portion of the food product 100 is arranged at the winding device 5.

If one wishes to tie particular food products 100, such as, for example, so-called "coppa", by means of the application of spiral windings of the twine to the food product 100, the free end of the twine 6 is initially fixed to the fixed frame 2 by virtue of the locking means 14 and the food product 100 is arranged on the conveyors 4, which are activated until the front end of the food product 100 is placed at the winding device 5, after which the conveyors 4 are stopped.

At this point, the winding device 5 is activated, turning the movement ring 10 about its axis in the direction of rotation 10a, so as to provide around the front end of the food product 100 multiple annular windings of the twine 6 that allow to fix the twine 6 to the food product 100.

After thus providing a certain number of windings, the locking means 14 release the free end of the twine 6, and while the movement ring 10 continues to rotate, the food product 100 is moved in the advancement direction 100a, so as to provide around the food product 100 successive windings of the twine 6 in a spiral along the entire longitudinal extension of the food product 100.

During the advancement movement of the food product 100 performed while the movement ring 10 continues in its rotary motion, the control means 22, based on the settings programmed by the operator, actuate the progressive increase of the tension of the twine 6 by the braking means as a function of to the movement of the food product 100.

In practice, based on the signals that arrive from the second position transducer 25, the control means 22 command the activation of the actuation cylinders 37 so as to provide a displacement of the actuation ring 36, in the sense that it causes a displacement of the pusher plate 32 in the direction of the abutment plate 28, so as to obtain an increase in the elastic pushing force applied by the spring 31 to the twine braking shoe 30 and thus increase the tensioning action applied to the twine.

By virtue of the possibility to increase the tension of the twine 6 as the food product 100 advances during the application of a winding of the twine 6 in a spiral on the food product, it is possible to prevent, in particular when a non-stretch twine 6 is used, the food product 100 from being constricted excessively by the twine 6 at its front end with respect to its rear end, thus ensuring that the food product 100 maintains an adequate cylindrical shape, differently from what occurs in the background art.

Once the application of the spiral windings of the twine 6 is finished, the conveyors 4 are stopped and after possibly applying at least one more annular winding the locking means 14 are activated and then the knotting means 19 are activated so as to provide the connection by means of a knot of the portions of twine 6 extending between the food product 100 and the locking means 14 and between the food product 100 and the twine feeder means 7, thus ensuring the locking of the twine 6 on food product 100.

In practice it has been found that the invention achieves the intended aim and objects and in particular it is emphasized that the machine according to the invention is capable of performing an optimal application of the twine to food products, especially with non-stretch twine, ensuring that the twine is always applied with the correct tension, during the operation of the machine.

The invention thus conceived is susceptible of numerous modifications and variations, all of which are within the scope of the appended claims; thus, for example, in order to actuate the displacement of the actuation ring 36 along its axis, it is possible to use at least one cam device or the like instead of the actuation cylinders 37.

All the details may furthermore be replaced with other technically equivalent elements, without departing from the scope of the appended claims.

In practice, the materials used, so long as they are compatible with the specific use, as well as the contingent shapes and dimensions, may be any according to the requirements and the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine (1) for tying food products, comprising a fixed frame (2) which supports supporting means (3) for at least one food product (100) to be tied and being provided with a winding device (5) which is adapted to wind at least one twine (6) around said food product (100), said winding device (5) comprising means (7) for feeding said twine (6), means for moving said feeder means (7) along a circular trajectory about said supporting means (3), means (14) for locking at least one portion of said twine (6) with respect to said fixed frame (2) and means (16) for guiding said twine (6) toward and around said food product (100), in order to form around said food product (100) at least one winding of said twine (6), knotting means (19) being provided which are adapted to mutually join, by means of at least one knot, at least two portions of said twine (6), and further comprising means for varying the tension of said twine (6) during at least one operational step of the operation of the machine, said means for varying the tension of said twine (6) comprising means (21) for braking said twine (6) which can move with respect to said twine (6) and are adapted to apply a braking action, which can vary on command, with respect to a relative sliding between said twine (6) and said braking means (21), **characterized in that** said braking means (21) are functionally connected to control means (22) configured to drive said braking means (21), in order to vary automatically the braking action (21) applied by said braking means (21) to said twine (6) during the operation of the machine.

2. The tying machine according to claim 1, **characterized in that** said supporting means (3) comprise means for moving the food product (100) with respect to said fixed frame (2) along an advancement direction (100a).

3. The tying machine according to claim 1, **characterized in that** said means for varying the tension of said twine (6) are adapted to vary the tension of said twine (6) during the winding of said twine (6) around said food product (100) and/or during the advancement of said food product (100) with respect to said fixed frame (2).

4. The tying machine according to one or more of the preceding claims, **characterized in that** said control means (22) are functionally connected to sensor means for detecting the position of said means (7) for feeding said twine (6) with respect to the fixed frame (2) and/or to sensor means for detecting the advancement level of the food product (100) with respect to said fixed frame (2).

5. The tying machine according to one or more of the preceding claims, **characterized in that** said braking means (21) comprise a presser element (26) and an abutment element (27), said twine (6) being interposed between said presser element (26) and said abutment element (27), means being provided for varying the compression force that can be applied by said presser element (26) to said twine (6).

6. The tying machine according to claim 5, **characterized in that** said presser element (26) and said abutment element (27) can move with respect to each other toward each other or mutually apart, by virtue of actuation means, in order to allow the variation of the friction action on said twine (6).

7. The tying machine according to claim 5, **characterized in that** said abutment element (27) comprises an abutment plate (28), said presser element (26) comprising a twine braking shoe (30) which faces said abutment plate (28) and is elastically pushed by elastic means in the direction of said abutment plate (28), means being provided for varying the elastic action applied by said elastic means to said twine braking shoe (30).

8. The tying machine according to claim 7, **characterized in that** said elastic means comprise at least one spring (31), said means for varying the elastic action applied by said elastic means comprising means for varying the length of said spring (31).

9. The tying machine according to claim 8, **characterized in that** said spring (31) acts between said twine braking shoe (30) and a pusher plate (32), which can be moved on command, in order to vary its distance from said twine braking shoe (30).

10. The tying machine according to claim 9, **characterized in that** said pusher plate (32) is integrally fixed to a supporting stem (33) which can be actuated slidingly in motion along its own axis with respect to said movement ring (10) by virtue of actuation means.

11. The tying machine according to claim 10, **characterized in that** said supporting stem (33) is connected to a contact pad (34), which slidingly engages a pusher element (35) which can move, with respect to said fixed frame (2), along a direction that is substantially parallel to the axis of said movement ring (10).

12. The tying machine according to claim 11, **characterized in that** said pusher element (35) comprises an actuation ring (36), which is arranged so that its axis is oriented substantially parallel to the advancement direction (100a) of said food product (100) and is supported by said fixed frame (2) with the possibility to move along a direction that is substantially parallel to its axis.

## Patentansprüche

1. Eine Maschine (1) zum Binden von Nahrungsmitteln, die einen festen Rahmen (2) umfasst, der Trägermittel (3) für mindestens ein zu bindendes Nahrungsmittel (100) trägt und mit einer Wicklungsvorrichtung (5) ausgestattet ist, die ausgebildet ist, um mindestens eine Schnur (6) um das Nahrungsmittel (100) zu wickeln, wobei die Wicklungsvorrichtung (5) Folgendes umfasst: Mittel (7) zum Zuführen der Schnur (6), Mittel zum Bewegen der Zuführmittel (7) entlang einer Kreisbahn um die Trägermittel (3), Mittel (14) zum Blockieren mindestens eines Abschnitts der Schnur (6) mit Bezug auf den festen Rahmen (2) und Mittel (16) zum Führen der Schnur (6) zu dem und um das Nahrungsmittel (100), um um das Nahrungsmittel (100) herum mindestens eine Wicklung der Schnur (6) zu bilden; wobei Verknotungsmittel (19) bereitgestellt sind, die ausgebildet sind, um mit Hilfe mindestens eines Knotens mindestens zwei Abschnitte der Schnur (6) miteinander zu verbinden; und die weiter Mittel zum Verändern der Spannung der Schnur (6) während mindestens eines Arbeitsschritts des Betriebs der Maschine umfasst, wobei die Mittel zum Verändern der Spannung der Schnur (6) Mittel (21) zum Abbremsen der Schnur (6) umfassen, die sich mit Bezug auf die Schnur (6) bewegen können und ausgebildet sind, um eine Bremswirkung, die auf Befehl variieren kann, mit Bezug auf ein relatives Gleiten zwischen der Schnur (6) und den Bremsmitteln (21) auszuüben; **dadurch gekennzeichnet, dass** die Bremsmittel (21) funktionell mit Steuerungsmitteln (22) verknüpft sind, welche konfiguriert sind, um die Bremsmittel (21) anzutreiben, um die Bremswirkung (21) automatisch zu verändern, die von den Bremsmitteln (21) während des Betriebs der Maschine auf die Schnur (6) ausgeübt wird.

2. Die Bindemaschine gemäß Anspruch 1, **dadurch gekennzeichnet, dass** die Trägermittel (3) Mittel umfassen, um das Lebensmittel (100) mit Bezug auf den festen Rahmen (2) in einer Vorschubrichtung (100a) zu bewegen.

3. Die Bindemaschine gemäß Anspruch 1, **dadurch gekennzeichnet, dass** die Mittel zum Verändern der Spannung der Schnur (6) ausgebildet sind, um die Spannung der Schnur (6) während des Wickelns der Schnur (6) um das Nahrungsmittel (100) und/oder während des Vorschubs des Nahrungsmittels (100) mit Bezug auf den festen Rahmen (2) zu verändern.

4. Die Bindemaschine gemäß einem oder mehreren der obigen Ansprüche, **dadurch gekennzeichnet, dass** die Steuerungsmittel (22) funktionell mit Sensormitteln zum Erfassen der Position der Mittel (7) zum Zuführen der Schnur (6) mit Bezug auf den festen Rahmen (2) und/oder mit Sensormitteln zum Erfassen des Grades der Vorschubs des Nahrungsmittels (100) mit Bezug auf den festen Rahmen (2) verknüpft sind.

5. Die Bindemaschine gemäß einem oder mehreren der obigen Ansprüche, **dadurch gekennzeichnet, dass** die Bremsmittel (21) ein Presselement (26) und ein Widerlagerelement (27) umfassen, wobei die Schnur (6) zwischen dem Presselement (26) und dem Widerlagerelement (27) angeordnet ist, wobei Mittel bereitgestellt sind, um die Druckkraft, die von dem Presselement (26) auf die Schnur (6) ausgeübt werden kann, zu verändern.

6. Die Bindemaschine gemäß Anspruch 5, **dadurch gekennzeichnet, dass** das Presselement (26) und das Widerlagerelement (27) sich mit Hilfe von Antriebsmitteln mit Bezug aufeinander zueinander hin oder voneinander fort bewegen können, um die Veränderung der Reibewirkung auf die Schnur (6) zu ermöglichen.

7. Die Bindemaschine gemäß Anspruch 5, **dadurch gekennzeichnet, dass** das Widerlagerelement (27) eine Widerlagerplatte (28) umfasst, wobei das Presselement (26) einen Schnur-Bremsschuh (30) umfasst, welcher der Widerlagerplatte (28) zugewandt ist und von elastischen Mitteln elastisch in Richtung der Widerlagerplatte (28) gedrückt wird, wobei Mittel bereitgestellt sind, um die elastische Wirkung, die von den elastischen Mitteln auf den Schnur-Bremsschuh (30) ausgeübt wird, zu verändern.

8. Die Bindemaschine gemäß Anspruch 7, **dadurch gekennzeichnet, dass** die elastischen Mittel mindestens eine Feder (31) umfassen, wobei die Mittel zum Verändern der von den elastischen Mitteln ausgeübten elastischen Wirkung Mittel zum Verändern der Länge der Feder (31) umfassen.

9. Die Bindemaschine gemäß Anspruch 8, **dadurch gekennzeichnet, dass** die Feder (31) zwischen dem Schnur-Bremsschuh (30) und einer Schubplatte (32) arbeitet, die auf Befehl zum Verändern ihres Abstands von dem Schnur-Bremsschuh (30) bewegt werden kann.

10. Die Bindemaschine gemäß Anspruch 9, **dadurch gekennzeichnet, dass** die Schubplatte (32) integral an einem tragenden Schaft (33) befestigt ist, der durch Antriebsmittel mit Bezug auf den Bewegungsring (10) entlang seiner eigenen Achse gleitend in Bewegung versetzt werden kann.

11. Die Bindemaschine gemäß Anspruch 10, **dadurch gekennzeichnet, dass** der tragende Schaft (33) mit einem Kontaktpad (34) verbunden ist, welches in gleitendem Eingriff mit einem Schieberelement (35) steht, das sich mit Bezug auf den festen Rahmen (2) in einer Richtung bewegen kann, die im Wesentlichen parallel zur Achse des Bewegungsrings (10) ist.

12. Die Bindemaschine gemäß Anspruch 11, **dadurch gekennzeichnet, dass** das Schieberelement (35) einen Antriebsring (36) umfasst, der so angeordnet ist, dass seine Achse im Wesentlichen parallel zur Vorschubrichtung (100a) des Nahrungsmittels (100) ausgerichtet ist, und von dem festen Rahmen (2) getragen ist mit der Möglichkeit, sich in eine Richtung zu bewegen, die im Wesentlichen parallel zu seiner Achse ist.

## Revendications

1. Machine (1) pour lier des produits alimentaires, comprenant un cadre fixe (2) qui supporte des moyens de support (3) pour au moins un produit alimentaire (100) à lier et qui est pourvu d'un dispositif d'enroulement (5) qui est adapté pour enrouler au moins une ficelle (6) autour dudit produit alimentaire (100), ledit dispositif d'enroulement (5) comprenant des moyens (7) pour alimenter ladite ficelle (6), des moyens pour déplacer lesdits moyens d'alimentation (7) le long d'une trajectoire circulaire autour desdits moyens de support (3), des moyens (14) pour verrouiller au moins une partie de ladite ficelle (6) par rapport audit cadre fixe (2) et des moyens (16) pour guider ladite ficelle (6) vers et autour dudit produit alimentaire (100), afin de former autour dudit produit alimentaire (100) au moins un enroulement de ladite ficelle (6), des moyens de nouage (19) étant prévus qui sont adaptés pour unir mutuellement, au moyen d'au moins un nœud, au moins deux portions de ladite ficelle (6), et comprenant en outre des moyens pour faire varier la tension de ladite ficelle (6) pendant au moins une étape opérationnelle du fonctionnement de la machine, lesdits moyens pour faire varier la tension de ladite ficelle (6) comprenant des moyens (21) pour freiner ladite ficelle (6) qui peuvent se déplacer par rapport à ladite ficelle (6) et qui sont adaptés pour appliquer une action de freinage, qui peut varier sur commande, en fonction d'un glissement relatif entre ladite ficelle (6) et lesdits moyens de freinage (21), **caractérisé en ce que** lesdits moyens de freinage (21) sont fonctionnellement reliés à des moyens de commande (22) configurés pour piloter lesdits moyens de freinage (21), afin de faire varier automatiquement l'action de freinage (21) appliquée par lesdits moyens de freinage (21) à ladite ficelle (6) au cours du fonctionnement de la machine.

2. La machine pour lier selon la revendication 1, **caractérisée en ce que** lesdits moyens de support (3) comprennent des moyens pour déplacer le produit alimentaire (100) par rapport audit cadre fixe (2) le long d'une direction d'avancement (100a).

3. La machine pour lier selon la revendication 1, **caractérisée en ce que** lesdits moyens de variation de la tension de ladite ficelle (6) sont adaptés pour faire varier la tension de ladite ficelle (6) pendant l'enroulement de ladite ficelle (6) autour dudit produit alimentaire (100) et/ou pendant l'avancement dudit produit alimentaire (100) par rapport audit cadre fixe (2).

4. La machine pour lier selon une ou plusieurs des revendications précédentes, **caractérisée en ce que** lesdits moyens de commande (22) sont fonctionnellement reliés à des moyens capteurs pour détecter la position desdits moyens (7) d'alimentation de ladite ficelle (6) par rapport au cadre fixe (2) et/ou à des moyens capteurs pour détecter le niveau d'avancement du produit alimentaire (100) par rapport audit cadre fixe (2).

5. La machine pour lier selon l'une ou plusieurs des revendications précédentes, **caractérisée en ce que** lesdits moyens de freinage (21) comprennent un élément presseur (26) et un élément de butée (27), ladite ficelle (6) étant interposée entre ledit élément presseur (26) et ledit élément de butée (27), des moyens étant prévus pour faire varier la force de compression pouvant être appliquée par ledit élément presseur (26) à ladite ficelle (6).

6. La machine pour lier selon la revendication 5, **caractérisée en ce que** ledit élément presseur (26) et ledit élément de butée (27) peuvent se déplacer l'un par rapport à l'autre, l'un vers l'autre ou mutuellement séparément, en vertu de moyens d'actionnement, afin de permettre la variation de l'action de frottement sur ladite ficelle (6).

7. La machine pour lier selon la revendication 5, **caractérisée en ce que** ledit élément de butée (27) comprend une plaque de butée (28), ledit élément presseur (26) comprenant un sabot de freinage de la ficelle (30) qui fait face à ladite plaque de butée (28) et qui est poussé élastiquement par des moyens élastiques en direction de ladite plaque de butée (28), des moyens étant prévus pour faire varier l'action élastique appliquée par lesdits moyens élastiques audit sabot de freinage de la ficelle (30).

8. La machine pour lier selon la revendication 7, **caractérisée en ce que** lesdits moyens élastiques comprennent au moins un ressort (31), lesdits moyens pour faire varier l'action élastique appliquée par lesdits moyens élastiques comprenant des moyens pour faire varier la longueur dudit ressort (31).

9. La machine pour lier selon la revendication 8, **caractérisée en ce que** ledit ressort (31) agit entre ledit sabot de freinage de la ficelle (30) et une plaque de poussée (32), qui peut être déplacée sur commande, afin de varier sa distance par rapport audit sabot de freinage de la ficelle (30).

10. La machine pour lier selon la revendication 9, **caractérisée en ce que** ladite plaque de poussée (32) est intégralement fixée à une tige de support (33) qui peut être actionnée en mouvement coulissant le long de son propre axe par rapport à ladite bague de mouvement (10) grâce à des moyens d'actionnement.

11. La machine pour lier selon la revendication 10, **caractérisée en ce que** ladite tige de support (33) est reliée à un tampon de contact (34), qui engage de manière coulissante un élément poussoir (35) qui peut se déplacer, par rapport audit cadre fixe (2), le long d'une direction qui est substantiellement parallèle à l'axe de ladite bague de mouvement (10).

12. La machine pour lier selon la revendication 11, **caractérisée en ce que** ledit élément poussoir (35) comprend un anneau d'actionnement (36), qui est disposé de manière à ce que son axe soit orienté substantiellement parallèlement à la direction d'avancement (100a) dudit produit alimentaire (100) et est supporté par ledit cadre fixe (2) avec la possibilité de se déplacer le long d'une direction qui est substantiellement parallèle à son axe.
